# EUROPÄISCHE PATENTSCHRIFT

(11) **EP 2 377 981 B1**
(45) Veröffentlichungstag und Bekanntmachung des Hinweises auf die Patenterteilung: **07.11.2012**
(21) Anmeldenummer: 11160935.0
(22) Anmeldetag: 04.04.2011
(51) Int. Cl.: D05C 3/04, F16M 5/00, D05B 75/00

(54) **Maschinengestell mit Träger, Verfahren zum Ausrichten des Trägers und Träger**
Machine frame with support, method for aligning the support and support
Cadre de machine avec support, procédé d'alignement du support et support

(30) Priorität: 14.04.2010 CH 5432010
(43) Veröffentlichungstag der Anmeldung: 19.10.2011
(73) Patentinhaber: Lässer AG, 9444 Diepoldsau (CH)
(72) Erfinder: Lässer, Franz, 9444 Diepoldsau (CH)
(74) Vertreter: Hasler, Erich

(56) Entgegenhaltungen:
- EP-A1- 1 624 100
- EP-A2- 0 599 053
- AT-B- 360 320
- GB-A- 190 925 531

## Beschreibung

Die vorliegende Erfindung betrifft ein Maschinengestell gemäss Oberbegriff von Anspruch 1; ein Verfahren zum Ausrichten des Trägers gemäss Oberbegriff von Anspruch 13 und einen Träger gemäss Oberbegriff von Anspruch 14.

Mehrkopf-Mehrnadel-Stickmaschine umfassen eine Mehrzahl von Singerstickmaschinenköpfen, die nebeneinander an einem Maschinengestell aufmontiert sind und durch eine gemeinsame Antriebswelle in Bewegung gesetzt werden. Der dadurch erreichte Synchronlauf der Köpfe ist notwendig, damit alle Nadeln gleichzeitig einstechen oder aus dem Stickboden heraus sind. Die Stichbildungsorgane und der Stichbildungsprozess der bekannten Mehrkopf-Mehrnadel-Stickmaschinen sind im Wesentlichen identisch mit denjenigen der Singer Stickmaschine.

Die vorliegende Erfindung bezieht sich insbesondere auf Mehrkopf-Mehmadel-Sticknähmaschinen, bei welchen jeder Stickkopf mit einer Mehrzahl von Nadelstellen ausgestattet ist. Die Stickköpfe dieser Mehrkopf-Stickmaschinen sind auf einem Tragarm lateral verschiebbar gelagert. Unterhalb jedes Stickkopfes befindet sich eine Stichplatte, in welcher ein Nadelloch für die Nadel vorgesehen ist und welche die Stichstelle örtlich definiert. Jede Nadel eines Stickkopfes ist lateral zur erwähnten Stichstelle verschiebbar, auf welcher im Betrieb das in einem in x- und y-Richtung verschiebbaren Spannrahmen aufgespannte Stickgut aufliegt. Jene Nadel, welche sich an der Stichstelle befindet, dringt bei der Nadelbewegung durch das Stickgut und in das Nadelloch. Dabei wird der Oberfaden durch das Stickgut geführt und durch eine entsprechende Nadelbewegung eine Schlaufe auf der Rückseite des Stickguts gebildet. Durch diese Schlaufe wird dann der Unterfaden geführt. Beim Rückzug der Nadel wird der Oberfaden angezogen und im Stickgut ein sogenannter Stich gebildet. Beim Sticken ist jeweils nur eine der Nadelstellen aktiv, nämlich diejenige welche sich an der Stichstelle befindet. Die Stickköpfe der erwähnten Mehrkopf-Stickmaschinen sind in bekannter Art in einem bestimmten Rapportverhältnis entlang des Tragarms angeordnet.

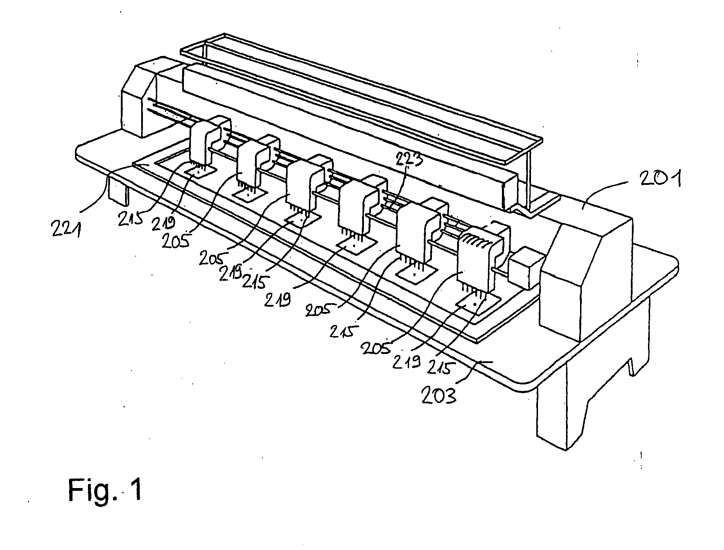

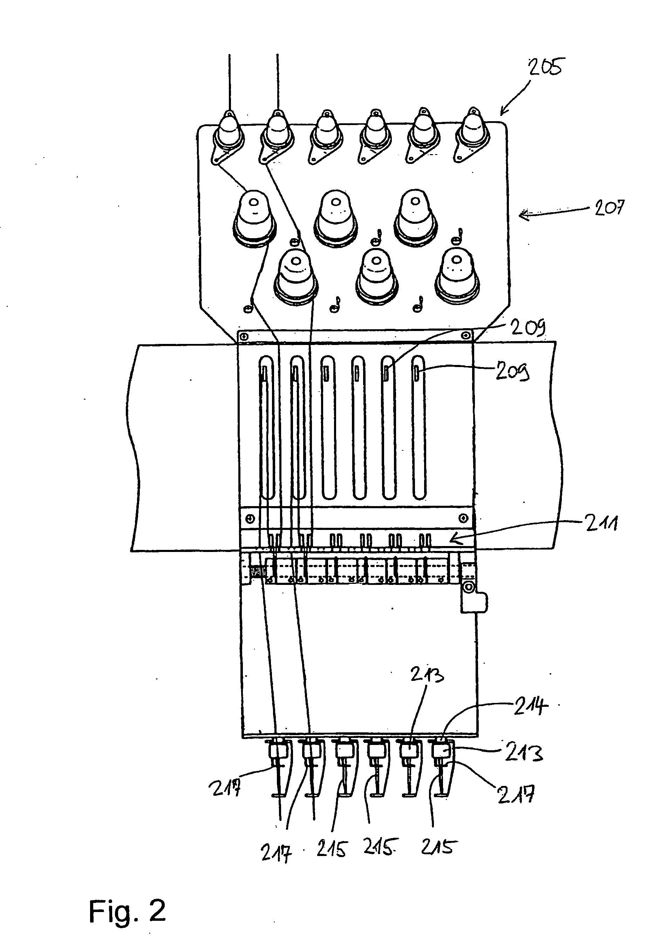

Eine konventionelle Mehrkopf-Mehrnadel-Sticknähmaschine ist beispielhaft in den Figuren 1 und 2 dargestellt. Diese umfasst ein Gestell 201, einen am Gestell 201 angeordneten Sticktisch 203 und eine Mehrzahl von in Reihe oberhalb des Sticktischs angeordneter Stickköpfe 205. Wie aus Figur 2 ersichtlich ist, besitzt jeder Stickkopf 205 mehrere mit je einer Nadel 215 ausgerüstete Nadelstellen. Jede Nadelstelle umfasst dabei stationäre Fadenführungselemente 207 bzw. Fadenbremsen, einen auf- und ab beweglichen Fadenaufnahmehebel resp. Fadenleiter 209, Fadenumlenkteile 211 und eine an einem Nadelkrebs 213 mit Nadelstössel 214 angeordnete Nadel 215. Wie aus Figur 2 weiter ersichtlich ist, ist jeder Nadelstössel 214 mit einem Stoffdrücker 217 ausgestattet. Unterhalb der Stickköpfe 205 sind Stickrahmen 219 vorgesehen, in welchen ein zu bestickender Stickgrund aufspannbar ist. Die Stickrahmen 219 können in einen grossen Spannrahmen 221, welcher sich über die Breite des Sticktischs 203 erstreckt, eingesetzt sein. Der Spannrahmen 221 ist in bekannter Art in x- und y-Richtung verschiebbar. Wie oben bereits erwähnt, sind die Stickköpfe an einer Linearführung 223 angeordnet und entlang dieser in x-Richtung verschiebbar.

Für ein einwandfreies Stickergebnis ist es erforderlich, dass die Nadeln nicht nur synchron angetrieben sind, sondern dass alle aktiven Nadeln exakt den gleichen Abstand zum Stickgrund haben. Andernfalls kann es vorkommen, dass sich die Nadeln noch im Stoff befinden, wenn der Stoff bewegt wird, oder Nadeln in den Stoff eindringen, obwohl dieser noch bewegt wird. In der Praxis hat sich gezeigt, dass die Position der einzelnen Nadeln bis auf wenige Zehntelsmillimeter übereinstimmen müssen.

Die EP-A-1 624 100 offenbart ein Gestell für eine Stickmaschine bestehend aus einem Vordergestell und einem Hintergestell. Diese bestehen im Wesentlichen jeweils aus einem Profil, welches sich in Längsrichtung der Maschine erstreckt und dessen Höhe der Gestellhöhe entspricht. Im Innern des Profils sind in Abständen voneinander Versteifungsrippen eingebaut. Die einzelnen Sektionen der Gestelle sind durch Schraubverbindungen miteinander verbunden.

Aufgabe der vorliegenden Erfindung ist es, ein Maschinengestell, insbesondere ein solches für eine Stickmaschine bereitzustellen, bei welchem ein langer Querträger bestehend aus mehreren miteinander verschraubten Segmenten mit einfachen Mitteln so ausgerichtet werden kann, dass er streng gerade ist und keinen Durchhang hat. Ein weiteres Ziel ist es, ein Verfahren vorzuschlagen, mittels welchem die einzelnen Segmente eines Trägers gegeneinander ausgerichtet werden können.

Erfindungsgemäss wird die Aufgabe bei einem Maschinengestell gemäss Oberbegriff von Anspruch 1 dadurch gelöst, dass zur Verbindung zweier benachbarter Segmente mindestens erste und zweite Verbindungsmittel vorgesehen sind, welche an einander gegenüberliegenden Seiten des Trägers anordenbar sind und dass die ersten und zweiten Verbindungsmittel derart mit den Enden zweier benachbarter Segmente verbindbar sind, dass ein Spalt zwischen diesen Segmenten verbleibt. Mindestens die zweiten Verbindungsmittel sind erfindungsgemäss so ausgelegt, dass die Spaltbreite auf der Seite des genannten zweiten Verbindungselementes gezielt durch entsprechende Verstellmittel verändert werden kann. Die zweiten Verbindungsmittel umfassen also Mittel, um die Spaltbreite asymmetrisch zu beeinflussen. Um ein Durchhängen eines aus Segmenten zusammengesetzten, vorzugsweise waagrechten Trägers zu verhindern, können die Segmente unten mittels Spannmitteln zusammengezogen werden. Dabei resultiert - bei konstant gehaltener oberer Spaltbreite - beim Zusammenziehen zweier benachbarter Segmente an deren Unterseite eine nach oben gerichtete Kraftkomponente, welche die miteinander verbundenen Segmentenden anhebt. Zum Ausrichten zweier miteinander verbundener Segmente werden diese unten soweit zusammengezogen, bis die Mittellängsachsen der Segmente koaxial sind. Das erfindungsgemässe Maschinengestell hat den Vorteil, dass auch sehr lange Träger von 5 bis 15 oder 20 Meter sich so ausrichten lassen, dass diese streng gerade sind und keinen Durchhang haben. Diese Träger können im Wesentlichen waagrecht oder in einem Winkel zur Waagrechten zwischen zwei seitlichen Stützen angeordnet sein.

Vorteilhaft sind die ersten Verbindungsmittel durch ein erstes Verbindungselement und erste Befestigungsmittel gebildet, und die zweiten Verbindungsmittel sind durch ein zweites Verbindungselement, zweite Befestigungsmittel und Spannmittel gebildet. Dabei kann mittels der zweiten Befestigungsmittel das zweite Verbindungselement mit einem Ende fest mit einem ersten Segment verbunden sein. Die Spannmittel sind gemäss der Erfindung ausgelegt, um mit einem stationären Teil des zweiten Segments, z.B. einem Bolzen, Anschlag oder Vorsprung, zwecks Veränderung der Spaltbreite zusammenzuwirken. Die beschriebene Ausführungsform hat den Vorteil, dass solche Spannmittel auf unterschiedliche Art und kostengünstig herstellbar ist. Im Rahmen der vorliegenden Erfindung sind unterschiedliche Ausführungen der Spannmittel denkbar. Von Bedeutung ist lediglich, dass der Abstand der Segmente einseitig gezielt veränderbar ist.

Gemäss einer bevorzugten Ausführungsform umfassen die Spannmittel einen Bolzen, welcher am zweiten Segment anordenbar ist, und eine Spanneinrichtung, welche am zweiten Verbindungselement vorgesehen oder angeordnet ist und mit dem Bolzen zwecks Veränderung der Spaltbreite zusammenwirken kann. Mit Hilfe dieser Konstruktion können benachbarte Segmente einseitig zusammengezogen werden, um dieselben gegeneinander auszurichten. Denkbar ist jedoch auch, Verstellmittel vorzusehen, mittels welcher der Abstand der Segmente voneinander vergrösserbar ist.

Vorteilhaft umfasst die Spanneinrichtung einen Spannstift, welcher in Längsrichtung des Trägers auf den Bolzen einwirken kann. Dabei ist das Verbindungselement mit dem Spannstift mit einem ersten Segment fest verbunden, und der Spannstift wirkt auf den Bolzen, welcher am zweiten Segment verankert ist, in Trägerlängsrichtung ein.

Vorteilhaft ist der Bolzen mit seinem Kopf in einer Bohrung des zweiten Verbindungselements mit Spiel aufgenommen, und die besagte Bohrung kommuniziert mit einer Gewindebohrung für den Spannstift, welche Gewindebohrung sich im Wesentlichen in Längsrichtung des Trägers erstreckt. Dies ist eine einfache und platzsparende Konstruktion.

Vorzugsweise sind die ersten Befestigungsmittel und das erste Verbindungselement derart ausgebildet, dass der Abstand der Segmente voneinander auf der Seite des ersten Verbindungselements im Wesentlichen konstant ist. Dies kann mit Gewindeschrauben und/oder Zentrierbolzen erreicht werden. Zweckmässigerweise sind die ersten und zweiten Befestigungsmittel in an den Segmenten vorgesehenen Öffnungen oder Bohrungen aufgenommen. Vorteilhaft ist jedem Bolzen am zweiten Segment ein Zentrierbolzen am ersten Segment zugeordnet. Dabei dient der dem Bolzen zugeordnete Zentrierbolzen als Gegenlager. Die Zentrierbolzen sind vorzugsweise mit minimalen Spiel in entsprechenden Bohrungen am Verbindungselement resp. in den Segmenten aufgenommen.

Eine bevorzugte Ausführungsform sieht vor, dass pro zweitem Verbindungselement wenigstens zwei in Abstand voneinander angeordnete Spannmittel vorgesehen sind. Diese Spannmittel können jeweils in kurzem Abstand von der Seitenkante vorgesehen sein. Mittels der beiden, voneinander unabhängig verstellbaren Spannmittel können die Segmente durch unterschiedliches Anziehen der Spannmittel auch in der Querrichtung ausgerichtet werden.

Die Spannmittel können am Verbindungselement vorgesehen oder teilweise in diesem integriert sein. Dabei kann das Verbindungselement als Verbindungsplatte ausgebildet sein, in welcher Bohrungen für die Aufnahme der Befestigungsschrauben und optional Zentrierbolzen vorgesehen sind. Für den Spannstift kann eine Gewindebohrung in einer Schmalseite vorgesehen sein.

Die Segmente eines Trägers können eine Länge zwischen 1 m und 4 m, vorzugsweise zwischen 1.5 m und 3.5 m und ganz besonders bevorzugt zwischen 2 m und 3 m haben. Solche Längen sind mit der nötigen Präzision herstellbar und noch gut transportierbar. Die aus solchen Segmenten zusammengesetzten Träger können Teil eines Stickmaschinengestells, insbesondere eines Gestells einer Mehrkopf-Mehrnadelstickmaschine sein. Vorzugsweise sind die Segmente aus einem Hohlprofil mit einem polygonen, vorzugsweise rechtwinkligen Querschnitt gebildet.

Als Befestigungsmittel können Befestigungsschrauben mit Muttern und optional Bolzen zum Einsatz kommen. Die Bolzen können in entsprechenden Bohrungen im Verbindungselement und in den Segmenten passgenau verankert sein.

Gegenstand der vorliegenden Erfindung ist auch ein Verfahren zum Ausrichten eines länglichen, aus mehreren Segmenten zusammensetzbaren Trägers, welches dadurch gekennzeichnet ist, dass die gegeneinander orientierten Enden zweier benachbarter Segmente mittels zweier an einander gegenüberliegenden Seiten der Segmente befestigbaren Verbindungsplatten derart verbunden werden, dass zwischen den Stirnseiten der benachbarten Segmente ein Spalt verbleibt, und dass die Segmente, d.h. der Längsachsen, relativ zueinander ausgerichtet werden, indem die Spaltbreite einseitig mittels Spannmittel verändert wird.

Gegenstand der vorliegenden Erfindung ist im Weiteren ein Träger gemäss Oberbegriff von Anspruch 14, welcher dadurch gekennzeichnet ist, dass zur Verbindung zweier benachbarter Segmente erste und zweite Verbindungsmittel vorgesehen sind, welche an einander gegenüberliegenden Seiten des Trägers anordenbar sind, dass die ersten und zweiten Verbindungsmittel derart mit den Enden zweier benachbarter Segmente verbindbar sind, dass ein Spalt zwischen diesen Segmenten verbleibt, und dass mindestens die zweiten Verbindungsmittel ausgelegt sind, um die Spaltbreite auf der Seite des genannten zweiten Verbindungselementes zu verändern. Weitere vorteilhafte Ausführungsformen des Trägers sind bereits oben im Rahmen der Beschreibung des Maschinengestells beschrieben worden.

Ausführungsbeispiele der Erfindung werden nachfolgend anhand der Figuren beispielhaft beschrieben. Es zeigt:
- Fig. 1: Eine herkömmliche Mehrkopf-Mehrnadel-Sticknähmaschine mit mehreren Stickköpfen in einer perspektivischen Ansicht;
- Fig. 2: Ein einzelner Stickkopf einer bekannten Mehrkopf-Mehrnadel-Sticknähmaschine mit mehreren Nadelstellen in einer Frontansicht;
- Fig. 3: in Seitenansicht ein Maschinengestell für eine Stickmaschine mit zwei an seitlichen Füssen angeordneten Querträgern , welche Querträger aus einzelnen Segmenten zusammengesetzt sind;
- Fig. 4: Eine Teilansicht des Maschinengestells von Fig. 3 in vergrössertem Massstab;
- Fig. 5: Eine Stirnansicht des Maschinengestells von Fig. 3;
- Fig. 6: in Explosionsdarstellung die Verbindung zwischen zwei Segmenten, wobei zwecks Anschaulichkeit ein Teil der Segmente weggeschnitten ist; und
- Fig. 7: in vergrößertem Maßstab und im Schnitt die Verbindung von zwei Segmenten.

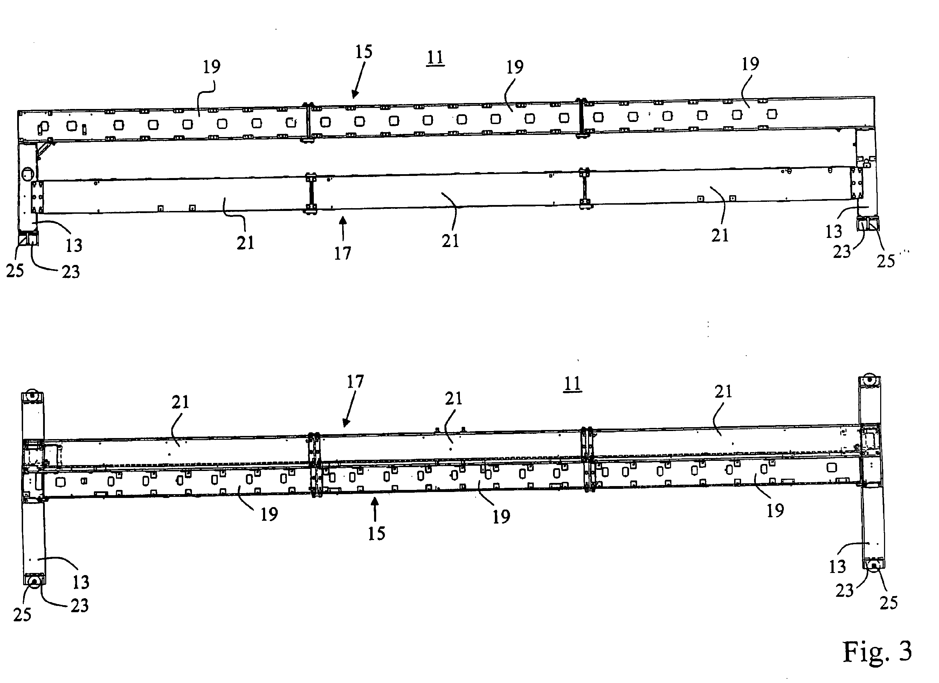

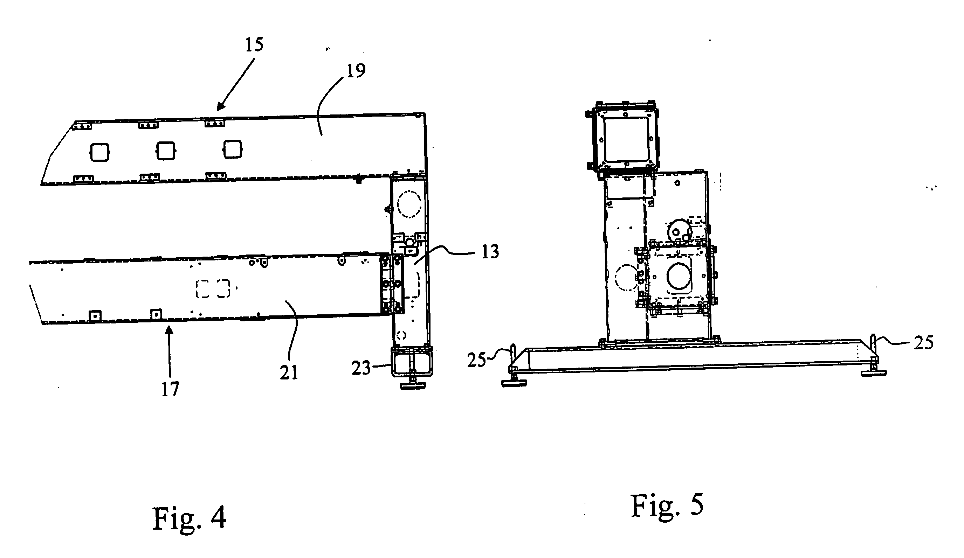

Die Figuren 3 bis 5 zeigen beispielhaft ein Gestell 11 für eine Stickmaschine, insbesondere für eine Mehrkop-Mehrnadelstickmaschine, mit seitlichen Stützen 13 und einem ersten und einem zweiten Träger 15,17, welche die endständigen Stützen 13 miteinander verbinden. Jeder Träger 15,17 ist aus einzelnen Segmenten 19,21 zusammengesetzt, wobei benachbarte Segmente 19,21 oben und unten miteinander verbunden sind. Die Segmente 19,21 sind vorzugsweise Hohlprofile mit quadratischem oder rechteckigem Querschnitt. Die Stützen 13 ruhen auf Füssen 23, welche mittels der in der Höhe verstellbaren Standfüße 25 waagrecht ausgerichtet werden können. Bei einer Mehrkopf-Mehrnadel-Stickmaschine sind am oberen Träger 19 eine Mehrzahl von jeweils mehreren Nadelstellen aufweisende Stickköpfe in Abstand voneinander angeordnet. Am unteren Träger 21 sind die Unterfadeneinheiten angeordnet.

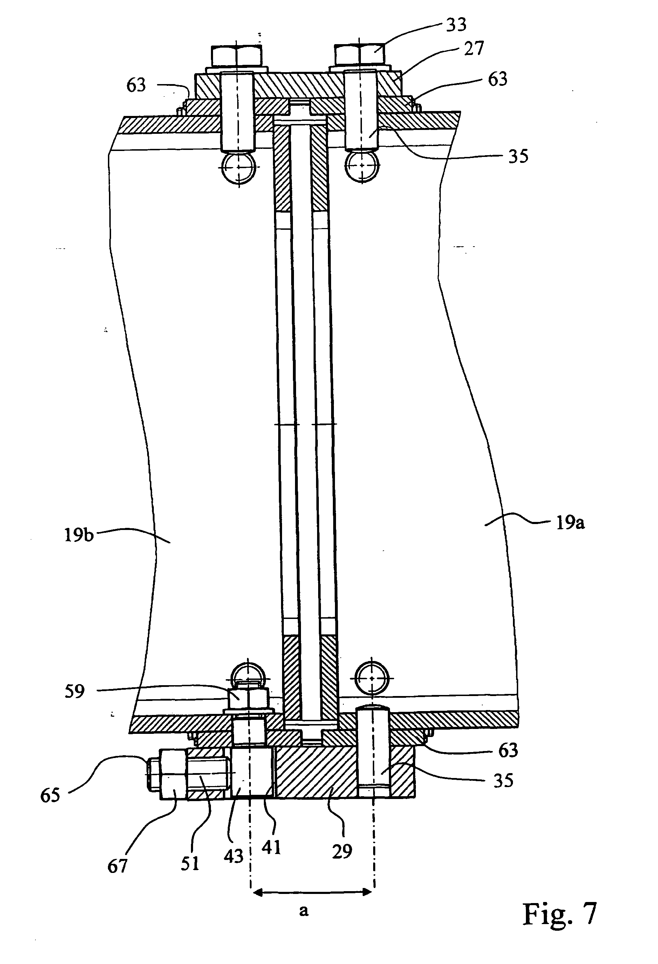

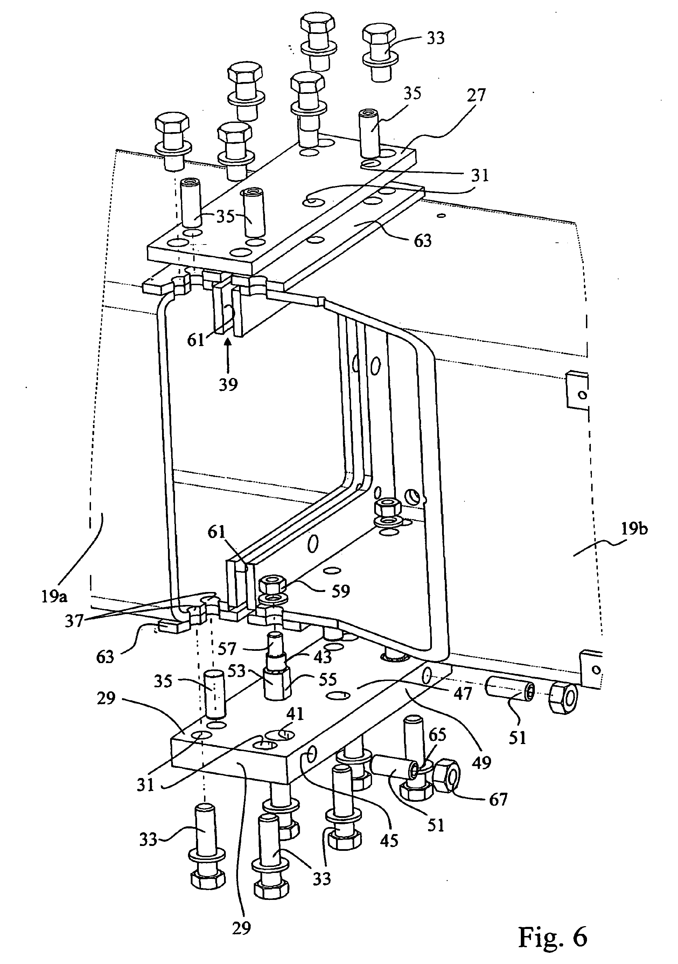

Die Segmente 19,21 sind vermittels erster Verbindungsplatten 27 und zweiten Verbindungsplatten 29 lösbar miteinander verbindbar. In den Figuren 6 und 7 ist die Verbindung zweier Segmente 19a,19b beispielhaft näher im Detail dargestellt. Wie aus den erwähnten Figuren erkennbar ist, verbinden die Verbindungsplatten 27,29 die einander gegenüberliegende Flachseiten der Segmente 19a,19b. Die Verbindungsplatten 27,29 besitzen in kurzem Abstand von den Längskanten jeweils eine Mehrzahl von in Abstand voneinander angeordneten ersten Löchern 31, welche der Aufnahme von Befestigungsschrauben 33 und von Zentrierbolzen 35 dienen. Die ersten Löcher 31 korrespondieren mit entsprechenden Bohrungen 37 in den Segmenten 19a,19b. Die Reihen von ersten Löchern 31 sind in einem solchen Abstand voneinander an den Verbindungsplatten 27,28 vorgesehen, dass bei verbundenen Segmenten 19a,19b ein Spalt 39 zwischen den Stirnseiten 61 der Segmente 19a,19b resultiert. Dieser Spalt 39 kann zwischen einem und mehreren Millimeter betragen. Es versteht sich von selbst, dass die Löcher 31 gleiche oder unterschiedliche Durchmesser haben können. Auch müssen diese nicht einer Reihe hintereinander angeordnet sein, sondern können beliebige Lochmuster einnehmen. Grundsätzlich könnte auch auf den Einsatz von Zentrierbolzen 35 verzichtet werden.

Um eine Ausrichtung zweier miteinander verbundenen Segmente 19 zu ermöglichen, sind erfindungsgemäß Mittel vorgesehen, um die Spaltbreite des Spalts 39 auf einer Seite des Trägers, d.h. asymmetrisch, zu verändern. Vorliegend sind zu diesem Zweck Spannmittel vorgesehen, mittels welcher der Achsabstand der Segmente 19a,19b voneinander auf einer Seite verändert werden kann. Gemäss der vorliegenden Erfindung sind in der unteren Verbindungsplatte 29 zweite Löcher 41 vorgesehen, welche der Aufnahme eines Spannbolzens 43 dienen. Die Löcher 41 kommunizieren mit einer Gewindebohrung 45, welche sich vorzugsweise parallel zur Flachseite 47 und senkrecht zur Schmalseite 49 der Verbindungsplatte 27 erstreckt. In die Gewindebohrung 45 ist ein Spannstift 51 eindrehbar. Der Bolzen 43 besitzt einen Kopf 53, welcher mit Spiel im Loch 41 aufgenommen ist. Am Kopf 53 ist vorteilhaft eine Flachseite 55 ausgebildet. Der Bolzen 43 wird so am Segment 19 angeordnet, dass die Flachseite 55 zur Gewindebohrung 45 orientiert ist. Zur Befestigung des Spannbolzens 43 dient vorzugsweise eine Gewindespitze 57, auf welche eine Schraubenmutter 59 aufschraubbar ist. Wird nun der Spannstift 51 in die Gewindebohrung 45 eingeschraubt, wirkt dessen Spitze mit der Flachseite 55 des Spannbolzens 43 zusammen. Dadurch kann die Lage des Spannbolzens 43 im Loch 41 verändert werden, wodurch die relative Lage von Verbindungsplatte 29 und Segment 19b beeinflussbar ist. Ist die Verbindungsplatte 29 fest am Segment 19a verankert, kann auf diese Weise der Abstand der Stirnseiten 61 voneinander verändert werden. Da der Abstand der Segmente 19a,19b voneinander an der gegenüberliegenden Seite durch die Verbindungsplatte 27 fixiert ist, kann auf diese Weise ein Durchhängen der Segmente korrigiert werden. Vorzugsweise ist am hinteren Ende des Spannstifts 51 ein Angriffsmittel in Form eines Innensechskants 65 vorgesehen. Zur Sicherung des Spannstifts 51 kann eine Kontermutter 67 auf den Spannstift aufgeschraubt werden.

In Figur 7 ist die Verbindung der Segmente 19a,19b näher im Detail gezeigt. Es ist erkennbar, dass der Bolzen 43 mit Spiel im Loch 41 aufgenommen ist. Zieht der Gewindestift 51 die Verbindungsplatte 29 nach links, verringert sich der Abstand a der Segmente 19a, 19b an der unteren Seite und es resultiert eine Kraftkomponente nach oben. Dabei fungiert der Bolzen 35 als Gegenlager für den Spannbolzen 43. Durch Eindrehen des Spannstifts 51 in die Gewindebohrung 45 verringert sich der Achsabstand a zwischen dem Bolzen 35 und dem Spannbolzen 43. Durch ungleiches Anziehen der voneinander beabstandeten Spannstifte 51 kann auch eine Ausrichtung der miteinander verbundenen Segmente auch in Querrichtung erfolgen.

Es ist denkbar, sowohl unten und als auch oben Verstellmöglichkeiten vorzusehen. Dies würde es erlauben, den Träger in zwei zueinander orthogonalen Richtungen auszurichten.

Um eine sichere und feste Verankerung der Bolzen 35 und Schrauben 33 in den Segmenten 19a,19b zu ermöglichen, sind am Rand der Segmente 19a, 19b Verstärkungsplatten 63 angeordnet. Dies ermöglicht, die Wandstärken der Profile relativ dünn zu halten.

Die Verbindung zweier Segmente 19a,19b geschieht wie folgt: Zuerst wird die obere Verbindungsplatte 27 mit den Zentrierbolzen 35 verstiftet und mittels der Befestigungsschrauben 33 an den Segmenten 19a, 19b festgeschraubt. Anschließend wird die untere Verbindungsplatte 29 mit den Zentrierbolzen 35 verstiftet, und die Spannbolzen 43 am Segment 19b angeordnet, sodass die Flachseiten 55 des Spannbolzens 43 in Längsrichtung der Segmente orientiert ist. Danach kann die Verbindungsplatte 29 angebracht und auf der Seite des Segments 19a festgeschraubt werden. Jetzt werden die Gewindestifte 51 soweit in die Gewindebohrung 45 eingeschraubt, bis die Segmente 19a,19b streng miteinander fluchten. Ist die relative Ausrichtung der Segmente 19a, 19b perfekt, dann können auch auf der Seite des Segments 19b die Schrauben 33 fest angezogen werden.

Ein Maschinengestell für eine Stickmaschine besitzt zwei endständige Stützen, zwischen welchen ein Träger im Wesentlichen waagrecht angeordnet ist. Der Träger ist aus einer Mehrzahl von länglichen Segmenten zusammengesetzt, deren gegeneinander orientierte Enden mittels erster und zweiter Verbindungsmittel lösbar miteinander verbunden sind. Die Verbindungsmittel in Gestalt von Verbindungsplatten sind an einander gegenüberliegenden Seiten, nämlich oben und unten an den Verbindungsstellen zweier benachbarter Segmente angeordnet und so ausgebildet, dass ein Spalt zwischen den Segmenten verbleibt. Die zweiten Verbindungsmittel umfassen zusätzlich Spannmittel, um die Spaltbreite auf der Seite des zweiten Verbindungsplatte zu verändern.

### Legende

- 11: Gestell
- 13: Stütze des Gestells
- 15: Erster Träger
- 17: Zweiter Träger
- 19: Segmente des ersten Trägers
- 21: Segmente des zweiten Trägers
- 23: Fuss der Stütze
- 25: Standfuss
- 27: Erste Verbindungsplatte
- 29: Zweite Verbindungsplatte
- 31: Löcher der Verbindungsplatten
- 33: Befestigungsschrauben
- 35: Zentrierbolzen
- 37: Bohrungen der Segmente
- 39: Spalt
- 41: zweite Löcher in der Verbindungsplatte 29
- 43: Bolzen
- 45: Gewindebohrung
- 47: Flachseite
- 49: Schmalseite
- 51: Spannstift
- 53: Kopf des Bolzens 43
- 55: Flachseite am Kopf 53
- 57: Gewindespitze
- 59: Schraubenmutter für Gewindespitze
- 61: Stirnseite der Segmente
- 63: Verstärkungsplatten
- 65: Innensechskants
- 67: Kontermutter

## Patentansprüche

1. Maschinengestell (11), insbesondere für eine Stickmaschine, mit einem Träger (15,17) zusammensetzbar aus einer Mehrzahl von länglichen Segmenten (19,21), welche an gegeneinander orientierten Enden mittels Verbindungsmitteln (27,29,33) lösbar miteinander verbindbar sind,
**dadurch gekennzeichnet,**
**dass** zur Verbindung zweier benachbarter Segmente (19a,19b) erste und zweite Verbindungsmittel (27,29,33) vorgesehen sind, welche an einander gegenüberliegenden Seiten des Trägers (15,17) anordenbar sind,
**dass** die ersten und zweiten Verbindungsmittel (27,29,33) derart mit den Enden zweier benachbarter Segmente (19a,19b) verbindbar sind, dass ein Spalt (39) zwischen diesen Segmenten (19a,19b) verbleibt, und
**dass** mindestens die zweiten Verbindungsmittel ausgelegt sind, um die Spaltbreite auf der Seite des genannten zweiten Verbindungsmittel (29) zu verändern.

2. Gestell nach Anspruch 1, **dadurch gekennzeichnet, dass** die ersten Verbindungsmittel (27,33a) durch ein erstes Verbindungselement (27) und erste Befestigungsmittel (33a) gebildet sind, und
dass die zweiten Verbindungsmittel (29,33) durch ein zweites Verbindungselement (29), zweite Befestigungsmittel (33b) und Spannmitteln (45,51) gebildet sind, wobei mittels der zweiten Befestigungsmittel (33b) das zweite Verbindungselement (29) fest mit einem ersten Segment (19a) verbindbar ist und die Spannmittel (45,51) ausgelegt sind, um mit einem stationären Teil (43) des zweiten Segments (19b) zwecks Veränderung der Spaltbreite zusammenwirken zu können.

3. Gestell nach Anspruch 1 oder 2, **dadurch gekennzeichnet, dass** die Spannmittel (45,51) einen Bolzen (43) umfassen, welcher am zweiten Segment (19b) anordenbar ist, und eine Spanneinrichtung (45,51), welche am zweiten Verbindungselement (29) vorgesehen oder angeordnet ist und mit dem Bolzen (43) zwecks Veränderung der Spaltbreite zusammenwirken kann.

4. Gestell nach Anspruch 3, **dadurch gekennzeichnet, dass** die Spanneinrichtung (45,51) einen Spannstift (51) umfasst, welcher in Längsrichtung des Trägers (15,17) auf den Bolzen (43) einwirken kann.

5. Gestell nach Anspruch 3 oder 4, **dadurch gekennzeichnet, dass** der Bolzen (43) mit seinem Kopf (53) in einer Bohrung (41) des zweiten Verbindungselement (29) mit Spiel aufgenommen ist und dass die Bohrung (41) mit einer Gewindebohrung (45) für den Spannstift (51) kommuniziert, welche Gewindebohrung (45) sich im Wesentlichen in Längsrichtung des Trägers (15,17) erstreckt.

6. Gestell nach einem der Ansprüche 2 bis 5, **dadurch gekennzeichnet, dass** die ersten Befestigungsmittel (33a) und das erste Verbindungselement (27) derart ausgebildet sind, dass der Abstand der Segmente (19a,19b) voneinander auf der Seite des ersten Verbindungselements (27) im Wesentlichen konstant ist.

7. Gestell nach einem der Ansprüche 2 bis 6, **dadurch gekennzeichnet, dass** die ersten und zweiten Befestigungsmittel (33a,33b) in an den Segmenten (19a,19b) vorgesehenen Öffnungen oder Bohrungen (31) aufgenommen sind.

8. Gestell nach einem der Ansprüche 2 bis 7, **dadurch gekennzeichnet, dass** die Befestigungsmittel (33a,33b) Gewindeschrauben sind und zusätzlich Zentrierbolzen (35) umfassen können.

9. Gestell nach einem der Ansprüche 3 bis 8, **dadurch gekennzeichnet, dass** jedem Bolzen (43) am zweiten Segment (19b) ein Zentrierbolzen (35) am ersten Segment zugeordnet ist.

10. Gestell nach einem der Ansprüche 2 bis 5, **dadurch gekennzeichnet, dass** pro zweitem Verbindungselement (29) wenigstens zwei in Abstand voneinander angeordnete Spannmittel (45,51) vorgesehen sind.

11. Gestell nach einem der Ansprüche 1 bis 10, **dadurch gekennzeichnet, dass** das Gestell (11) ein Stickmaschinengestell ist und die Segmente (19,21) eine Länge zwischen 1 m und 4 m, vorzugsweise zwischen 1.5 m und 3.5 m und ganz besonders bevorzugt zwischen 2 m und 3 m haben.

12. Gestell nach einem der Ansprüche 1 bis 11, **dadurch gekennzeichnet, dass** die Segmente (19,21) aus einem Hohlprofil mit einem polygonen, vorzugsweise rechtwinkligen Querschnitt gebildet sind.

13. Verfahren zum Ausrichten eines länglichen, aus mehreren Segmenten (19,21) zusammensetzbaren Trägers (19,21), insbesondere zur Kompensation eines möglichen Durchhangs des länglichen Trägers,
**dadurch gekennzeichnet,**
**dass** die gegeneinander orientierten Enden zweier benachbarter Segmente (19a,19b) mittels zweier an einander gegenüberliegenden Seiten der Segmente (19a,19b) befestigbaren Verbindungsplatten (27,29) derart verbunden werden, dass zwischen den Stirnseiten (61) der benachbarten Segmente (19a,19b) ein Spalt (39) verbleibt, und dass die Segmente (19a,19b) relativ zueinander ausgerichtet werden, indem die Spaltbreite einseitig mittels Spannmittel (45,51) verändert wird.

14. Träger zusammensetzbar aus einer Mehrzahl von länglichen Segmenten (27,29), welche an gegeneinander orientierten Enden mittels Verbindungsmitteln lösbar miteinander verbindbar sind,
**dadurch gekennzeichnet,**
**dass** zur Verbindung zweier benachbarter Segmente (19a,19b) erste und zweite Verbindungsmittel (27,29,33) vorgesehen sind, welche an einander gegenüberliegenden Seiten des Trägers anordenbar sind,
**dass** die ersten und zweiten Verbindungsmittel (27,29,33) derart mit den Enden zweier benachbarter Segmente verbindbar sind, dass ein Spalt (39) zwischen diesen Segmenten (19a,19b) verbleibt, und
**dass** mindestens die zweiten Verbindungsmittel ausgelegt sind, um die Spaltbreite auf der Seite des genannten zweiten Verbindungselementes (29) zu verändern.

15. Träger gemäss Anspruch 14 und dem Kennzeichen eines der Ansprüche 1 bis 12.

## Claims

1. Machine frame (11), in particular for an embroidery machine, with a support (15, 17) that can be built up of a plurality of oblong segments (19, 21) that can be detachably connected with each other at ends that are orientated against each other by means of connecting means,
**characterized in**
**that** first and second connecting means (27, 29, 33) that can be placed at opposed sides of the support (15, 17) are provided for connecting two adjacent segments (19a, 19b),
**that** the first and second connecting means (27, 29, 33) can be connected with the ends of two adjacent segments (19a, 19b) in such a manner that it remains a gap (39) between these segments (19a, 19b) and
**that** at least the second connecting means are designed in order to vary the gap width on the side of said second connecting means (29).

2. Frame according to claim 1, **characterized in that** the first connecting means (27, 33a) are formed by a first connecting element (27) and first fixing means (33a) and
that the second connecting means (29, 33) are formed by a second connecting element (29), second fixing means (33b) and clamping means (45, 51), whereby the second connecting element (29) can be fixedly connected by means of the second fixing means (33b) to a first segment (19a) and the clamping means (45, 51) are designed in order to be able to cooperate with a stationary part (43) of the second segment (19b) for varying the gap width.

3. Frame according to claim 1 or 2, **characterized in that** the clamping means (45, 51) comprise a bolt (43) that can be placed on the second segment (19b) and a clamping device (45, 51) that is provided or placed on the second connecting element (29) and that can cooperate with the bolt (43) for varying the gap width.

4. Frame according to claim 3, **characterized in that** the clamping device (45, 51) comprises a clamping pin (51) which can act on the bolt (43) in longitudinal direction of the support (15, 17).

5. Frame according to claim 3 or 4, **characterized in that** the bolt (43) is received with its head (53) in a bore (41) of the second connecting element (29) with clearance and that the bore (41) communicates with a threaded bore (45) for the clamping pin (51), which threaded bore (45) extends substantially in longitudinal direction of the support (15, 17).

6. Frame according to any of the claims 2 to 5, **characterized in that** the first fixing means (33a) and the first connecting element (27) are configured in such a manner that the distance of the segments (19a, 19b) from each other is substantially constant on the side of the first connecting element (27).

7. Frame according to any of the claims 2 to 6, **characterized in that** the first and the second fixing means (33a, 33b) are received in openings or bores (31) provided on the segments (19a, 19b).

8. Frame according to any of the claims 2 to 7, **characterized in that** the fixing means (33a, 33b) are threaded screws and can additionally comprise centering pins (35).

9. Frame according to any of the claims 3 to 8, **characterized in that** a centering pin (35) on the first segment is assigned to each bolt (43) on the second segment (19b).

10. Frame according to any of the claims 2 to 5, **characterized in that** at least two clamping means (45, 51) placed spaced from each other are provided per second connecting element (29).

11. Frame according to any of the claims 1 to 10, **characterized in that** the frame (11) is an embroidery machine frame and the segments (19, 21) have a length between 1 m and 4 m, preferably between 1,5 m and 3,5 m and particularly preferably between 2 m and 3 m.

12. Frame according to any of the claims 1 to 11, **characterized in that** the segments (19, 21) are formed from a hollow profile with a polygonal, preferably with a right-angled cross section.

13. Method for aligning an oblong support (19, 21)that can be built up of several segments (19, 21), in particular for the compensation of a possible sag of the oblong support,
**characterized in**
**that** the ends orientated against each other of two adjacent segments (19a, 19b) are connected by means of two connecting plates (27, 29) that can be fixed at opposed sides of the segments (19a, 19b) in such a manner that there remains a gap (39) between the front sides (61) of the adjacent segments (19a, 19b) and that the segments (19a, 19b) are aligned relatively to each other, whereby the gap width is varied on one side by means of clamping means (45, 51).

14. Support that can be built up of a plurality of oblong segments (27, 29) which can be detachably connected with each other by means of connecting means at ends orientated against each other,
**characterized in**
**that** first and second connecting means (27, 29, 33) that can be placed on opposed sides of the support are provided for connecting two adjacent segments (19a, 19b),
**that** the first and second connecting means (27, 29, 33) can be connected with the ends of two adjacent segments in such a manner that there remains a gap (39) between these segments (19a, 19b) and
**that** at least the second connecting means are designed to vary the gap width on the side of said second connecting element (29).

15. Support according to claim 14 and to the characteristic of any of the claims 1 to 12.

## Revendications

1. Bâti de machine (1), en particulier pour une machine à broder, avec un support (15, 17) pouvant être assemblé à partir d'une pluralité de segments allongés (19, 21) qui peuvent être reliés l'un à l'autre de manière amovible à des extrémités orientées l'une contre l'autre au moyen de moyens de liaison (27, 29, 33), **caractérisé en ce**
**que** des premiers et des seconds moyens de liaison (27, 29, 33) qui peuvent être placés sur des côtés opposés l'un à l'autre du support (15, 17) sont prévus pour relier deux segments voisins (19a, 19b),
**que** les premiers et les seconds moyens de liaison (27, 29, 33) peuvent être reliés aux extrémités de deux segments voisins (19a, 19b) de telle manière qu'il reste une fente (39) entre ces segments (19a, 19b) et
**qu'**au moins les seconds moyens de liaison sont conçus pour modifier la largeur de la fente sur le côté du second moyen de liaison mentionné (29).

2. Bâti selon la revendication 1, **caractérisé en ce que** les premiers moyens de liaison (27, 33a) sont formés par un premier élément de liaison (27) et des premiers moyens de fixation (33a) et
que les seconds moyens de liaison (29, 33) sont formés par un second élément de liaison (29), des seconds moyens de fixation (33b) et des moyens de serrage (45, 51), le second élément de liaison (29) pouvant être relié de manière fixe à un premier segment (19a) au moyen des seconds moyens de fixation (33b) et les moyens de serrage (45, 51) étant conçus pour pouvoir coopérer avec une partie stationnaire (43) du second segment (19b) pour modifier la largeur de la fente.

3. Bâti selon la revendication 1 ou 2, **caractérisé en ce que** les moyens de serrage (45, 51) comprennent un boulon (43) qui peut être placé sur le second segment (19b) et un dispositif de serrage (45, 51) qui est prévu ou placé sur le second élément de liaison (29) et qui peut coopérer avec le boulon (43) pour modifier la largeur de la fente.

4. Bâti selon la revendication 3, **caractérisé en ce que** le dispositif de serrage (45, 51) comprend une goupille de serrage (51) qui peut agir dans le sens longitudinal du support (15, 17) sur le boulon (43).

5. Bâti selon la revendication 3 ou 4, **caractérisé en ce que** le boulon (43) est logé avec sa tête (53) dans une forure (41) du second élément de liaison (29) avec du jeu et que la forure (41) communique avec une forure filetée (45) pour la goupille de serrage (51), laquelle forure filetée (45) s'étend substantiellement dans le sens longitudinal du support (15, 17).

6. Bâti selon l'une des revendications 2 à 5, **caractérisé en ce que** les premiers moyens de fixation (33a) et le premier élément de liaison (27) sont configurés tels que la distance des segments (19a, 19b) l'un par rapport à l'autre est substantiellement constante sur le côté du premier élément de liaison (27).

7. Bâti selon l'une des revendications 2 à 6, **caractérisé en ce que** les premiers et les seconds moyens de fixation (33a, 33b) sont logés dans des ouvertures ou des forures (31) prévues sur les segments (19a, 19b).

8. Bâti selon l'une des revendications 2 à 7, **caractérisé en ce que** les moyens de fixation (33a, 33b) sont des vis filetées et peuvent comprendre en plus des boulons de centrage (35).

9. Bâti selon l'une des revendications 3 à 8, **caractérisé en ce qu'**un boulon de centrage (35) sur le premier segment est affecté à chaque boulon (43) sur le second segment (19b).

10. Bâti selon l'une des revendications 2 à 5, **caractérisé en ce qu'**au moins deux moyens de serrage (45, 51) placés espacés l'un de l'autre sont prévus par second élément de liaison (29).

11. Bâti selon l'une des revendications 1 à 10, **caractérisé en ce que** le bâti (11) est un bâti de machine à broder et les segments (19, 21) ont une longueur entre 1 m et 4 m, de préférence entre 1,5 m et 3,5 m et de manière particulièrement préférée entre 2 m et 3 m.

12. Bâti selon l'une des revendications 1 à 11, **caractérisé en ce que** les segments (19, 21) sont formés par un profil creux avec une section polygonale, de préférence à angle droit.

13. Procédé pour orienter un support allongé (19, 21), pouvant être assemblé à partir de plusieurs segments (19, 21), en particulier pour la compensation d'un affaissement possible du support allongé,
**caractérisé en ce**
**que** les extrémités orientées l'une contre l'autre de deux segments voisins (19a, 19b) sont reliées l'une à l'autre au moyen de deux plaques de liaison (27, 29) pouvant être fixées sur des côtés opposés l'un à l'autredes segments (19a, 19b) de telle manière qu'il reste une fente (39) entre les côtés frontaux (61) des segments voisins (19a, 19b) et que les segments (19a, 19b) sont orientés l'un par rapport à l'autre cependant que la largeur dela fente est modifiée d'un côté au moyen de moyens de serrage (45, 51).

14. Support pouvant être assemblé à partir d'une pluralité de segments allongés (27, 29) qui peuvent être reliés l'un à l'autre de manière amovible au moyen de moyens de liaison,
**caractérisé en ce**
**que** des premiers et des seconds moyens de liaison (27, 29, 33)qui peuvent être placés sur des côtés opposés l'un à l'autre du support sont prévus pour la liaison de deux segments voisins (19a, 19b),
**que** les premiers et les seconds moyens de liaison (27, 29, 33)peuvent être reliés aux extrémités de deux segments voisins de telle manière qu'il reste une fente (39) entre ces segments (19a, 19b) et
**qu'**au moins les seconds moyens de liaison sont conçus pour modifier la largeur de la fente sur le côté du second moyen de liaison mentionné (29).

15. Support selon la revendication 14 et la caractéristique d'une des revendications 1 à 12.
